# FASCICULE DE BREVET EUROPEEN

(11) **EP 0 610 152 B1**
(45) Date de publication et mention de la délivrance du brevet: **27.08.1997**
(21) Numéro de dépôt: 94670002.8
(22) Date de dépôt: 04.02.1994
(51) Int. Cl.: F23G 5/00, F23G 7/12, F23G 5/46, F23J 15/00

(54) **Incinérateur pour déchets**
Abfallverbrennungsanlage
Waste incinerator

(30) Priorité: 05.02.1993 ES 9300219
(43) Date de publication de la demande: 10.08.1994
(73) Titulaire: Teles de Menezes Junior, Antonio, 4200 Porto (PT)
(72) Inventeur: Teles de Menezes Junior, Antonio, 4200 Porto (PT)
(74) Mandataire: Pelayo de Sousa Henriques, Rui

(56) Documents cités:
- EP-A- 0 347 519
- FR-A- 2 519 410
- GB-A- 390 015
- US-A- 4 454 427
- US-A- 4 895 083
- PATENT ABSTRACTS OF JAPAN vol. 4, no. 94 (M-019) 8 Juillet 1980 & JP-A-55 051 221 (GIKEN KOGYO KK) 14 Avril 1980

## Description

L 'invention ici présentée est un incinérateur pour déchets, dont son application est destinée, en premier lieu, à la fabrication des appareils d'incinération, et secondement, à l'industrie de l'ambiant.

Plus spécifiquement l'invention qu'on présente ici est un incinérateur d'ordures - dont son objectif, comme on peut facilement vérifier c'est détruire les ordures déchargées dans l'intérieur du même, permettant au même temps de chauffer une chaudière par moyen de la chaleur produite pendant l'incinération - qui compte avec des moyens accessoires d'exhaustion, transport et purification des gaz qui sont produits dans l'intérieur de la chambre de combustion; qui compte avec la récupération subséquent des résidus qui sont en suspension dans les mêmes; et qui compte encore avec un système automatique qui permet d'extraire les résidus incombustibles qui sont dans la chambre de combustion au même temps qu'il rend possible la classification postérieure des mêmes.

Aujourd'hui on connaît une vaste gamme d'incinérateurs qui ont la mission spécifique de permettre la désintégration des corps qui sont jetés dans son intérieur, où plus tard se fait l'extraction des résidus par l'intervention directe de quelques ouvriers qui attendent toujours que la combustion soit finie et que la température de l'intérieur du four ou chambre de combustion permet son exécution.

On connaît aussi d'autres incinérateurs des résidus, ou dégâts, qu'ont une vocation particulière pour la destruction de certains éléments, soient ils pneus ou d'autres corps similaires, ou même des corps qui aient des éléments combustibles, mais qui aient dans sa composition d'autres corps incombustibles qui doivent être retirés dedans la chambre de combustion ou du four, après le brûlement des éléments combustibles.

On connaît aussi l'existence de plusieurs installations d'incinération qui se destinent à permettre la transformation des différents matériaux organiques, lesquelles sont situées dans des points géographiques bien définis où est transportée la matière qui doit être transformée.

En particulier on connaît encore un four de résidus décrit au document GB-A-390 015. Ce four la est doté d'une grille où les résidus tombent et sont brûlés. L'air nécessaire à la combustion est introduit dans le four, sous pression, a travers des petits trous de la grille. La principale limitation de ce dispositif est que les résidus obturent les trous de la grille, notamment, au moment où l'élément (14) pousse les cendres.

Cependant, ce qu'on ne connaît pas actuellement c'est l'existence d'un incinérateur d'ordures et des dégâts, dans lequel, en plus de développer une transformation associée avec une destruction des différents corps, on parvient à détruire ces corps au même temps qu'on fait automatiquement la division des corps qui ne se modifient pas et que les effets de l'incinération produisent une réaction de chauffage sur un élément différent - qui peut être employé comme une source de chaleur pour le profit et l'usage industriel - et que les gaz qui émanent de la combustion ou incinération réalisée sont transformés et traités pour ne porter préjudice au ambiant.

La solution pour la problématique qui existe actuellement concernant ce sujet, c'est d'utiliser un élément incinérateur qui ait toutes les caractéristiques déjà citées.

L'incinérateur d'ordures que cette invention présente est, tout seul, une solution pour le problème qui existe dans ce secteur, puisque, avec cet appareil la transformation des différents produits est faite d'une façon automatique, ayant encore des silos indépendants pour les différents corps au même temps qu'il donne la possibilité de filtrer convenablement les gaz qui sont émanés de la combustion et aussi de profiter de la chaleur produite pour échauffer une chaudière additionnel, dont à l'intérieur on peut extraire un élément totalement profitable.

En conformité avec ce qui a été déjà expliqué, le terrain doit être préparé convenablement afin que le lieu de décharge d'ordures soit situé dans un niveau légèrement supérieure à l'entrée du silo.

A côté du silo où sont déchargées les ordures il y a un deuxième silo qui sert de dépôt des pneus ou des morceaux des pneus, spécialement des automobiles.

Au fond de chacun des silos, c'est-à-dire, au fond du silo réservé à recevoir les ordures et au fond du silo destiné à recevoir les pneus, il y a une lame ou une pièce rigide qui détermine le fond respectif, laquelle, à travers son mouvement, provoque l'alimentation de la chambre de combustion, déchargeant les matières dans la partie inférieur de celle-ci, c'est--à-dire, dans la partie antérieure de la même, de façon à ce qu'il existe une distribution uniforme de la matière déchargée dans toute la largeur d'entrée de la chambre de combustion ou du four.

Dû au rythme du mouvement de va-et-vient, duquel les lames sont dotées, la combustion est réglée convenablement, vu que ces lames ont un mouvement de vélocité réglable d'accord avec la combustion qui est faite à l'intérieur du four.

Dans le côté supérieur des silos, particulièrement dans sa bouche il y a des couvercles qui ferment avec mouvement basculaire, lesquels ont la fonction d'empêcher la sortie des odeurs et n'importe quels gaz qui puissent émaner par hasard de la chambre ou du four de combustion, inclusivement, qui pourraient enflammer le contenu des silos et, conséquemment, causer une combustion indésirable du matériel y existant, phénomène qu'on évite avec l'existence de ce couvercle qui empêche la rénovation de l'oxygène à l'intérieur des silos et, à cause de cela empêche la combustion du matériel qui est dans les silos.

Les couvercles sont ouverts seulement au moment où sont faites des décharges pour l'intérieur des silos, lesquelles sont réalisées par des véhicules propres pour l'effet.

La région inférieure des silos a une petite inclination pour éviter que l'eau qui est contenue en grande quantité dans les ordures et les dégâts qui sont dans les silos entre dans la chambre de combustion ou dans le four, ce que serait préjudiciable pour le brûlement du matériel y existant.

De cette manière, les liquides résiduels seront canalisés pour un tube et déchargés par une canalisation convenable - pour éviter des possibles odeurs - en dispositifs de traitement de ces liquides, dispositifs qu'on ne décrit pas ici parce qu'ils ne sont pas le but de la présente demande de brevet d'invention.

Afin de permettre la combustion, l'installation a une porte réglable d'entrée d'air, laquelle sera plus ou moins ouverte conformément aux nécessités de combustion.

Pour obtenir un meilleur arrachement de la combustion ou pour aider celle-ci quand il se trouve nécessaire, ou bien, pour obtenir une combustion convenable de la matière organique qui doit être transformée, on utilise, dans la chambre ou le four, un ou plusieurs brûleurs, situés dans des lieux appropriés, alimentés, par huile déjà utilisé ou un autre produit similaire, à partir de l'extérieur de la chambre déjà cité.

La partie inférieure de la chambre de combustion ou du four, fabriquée de préférence dans un matériel réfractaire, a une petite inclination et est plus grand du côté de la sortie, de telle façon que la matière existante à l'intérieur du four, en spécial la matière plastique liquéfiée, reste gardée jusqu'au moment ou elle est complètement brûlée, ce qu'on accomplit parce que cette matière, dû à l'action de la gravité, glisse dans le sens contraire au mouvement qui traîne l'autre partie de la matière, lequel est provoqué par l'action d'unes lames excentriques qui sont situées au fond de la chambre et sont disposées en espaces réguliers, dans les deux sens: dans le sens transversal et aussi dans le sens longitudinal de la chambre de combustion déjà citée.

Les lames mentionnées qui sont au fond de la chambre de combustion exercent les fonctions suivantes:
- En premier elles traînent et élèvent les différentes matières qui sont déchargées dans le four ou chambre de combustion, ayant par conséquence, une production d'une forte entrée d'oxygène dans le sein de ces matières, lequel est indispensable pour une combustion convenable.
- Secondement, elles font le déplacement toute au long de la chambre déjà cité des différentes matières qui constituent les ordures ou les dégâts, pour que la combustion soit réalisée dans toute sa région de base et non seulement dans le lieu où ces matières tombent des silos.

Ces lames excentriques sont placées en différentes positions, de façon à permettre un mouvement continu du matériel qu'on veut brûler, au même temps qu'elles donnent la chance au matériel qui n'a pas été brûlé, c'est-à-dire, incombustible, d'être traîné jusqu'au fin de la chambre de combustion, où il tombera dans des wagonnets qui font le transport du matériel pour l'extérieur de la chambre de combustion, permettant plus tard sa division et classification convenables.

La vitesse d'action à l'intérieur du four ou de la chambre de combustion des lames déjà mentionnées sera réglée convenablement en conformité avec le type des matérielles qu'on veut brûler et le temps de combustion.

Dans la région de la chambre de combustion parmi laquelle sortent les gaz qui proviennent de la combustion il y a une chaudière qui permet la subséquent production d'énergie thermo-électrique, laquelle est échauffée grâce à la chaleur qui provient du brûlement fait à l'intérieur de la chambre ou du four déjà cité.

Les gaz qui ont l'origine dans le brûlement des matériaux déjà nommés, au moment ou ils sont aspirés, passent par la chaudière déjà cité, donnant au même temps la possibilité de chauffer cette chaudière avec cette même chaleur, traversant ensuite par les aspirateurs qui sucent ces mêmes gaz de la chambre de combustion de façon qu'ils soient filtrés plus tard.

L'aspiration des gaz est réalisée par des aspirateurs, qui rendent plus facile la succion des impuretés qui sont en suspension dans les gaz de combustion, tels que les poudres, les cendres, les fumées et les odeurs qui résultent du matériel brûlé dedans la chambre déjà cité.

Postérieurement, ces impuretés seront canalisées pour des bassins ou dépôts.

La tâche d'aspiration et canalisation sera répétée les fois nécessaires, de façon à assurer la destruction presque total des impuretés.

Dans les aspirateurs on a prévu l'existence des injecteurs de liquide, lesquels ont comme fonction principal: nettoyer et refroidir les gaz qui ont été aspirés.

Additionnellement, ces injecteurs ont la fonction d'empêcher l'échauffement en excès, au même temps qu'ils empêchent les impuretés d'être prises aux turbines respectives, ou même qu'ils se forment des "crèmes" épaisses composées par des résidus - en particulier ceux qui résultent des matières grasses - dans la superficie du liquide qui sert à filtrer et qui est dans les bassins ou les dépôts déjà nommés.

La fonction des bassins ou des dépôts, qui sont pleins d'un liquide qui est utilisé dans la filtration, c'est d'aider les aspirateurs dans la tâche de nettoyer et refroidir les gaz.

Toutes les particules qui sont plus denses que le liquide rapporté seront déposées au fond des bassins et retirées par des purgatives, pour une transformation postérieure.

Les premiers bassins sont similaires, ils sont tous fermés et communiquent entre eux parmi une tubage d'aspiration et d'une autre, plus fine, qui permet d'avoir un niveau égal dans les différents bassins, permettant encore la distribution, par décantage, des impuretés plus denses que la solution aqueuse.

Le dernier bassin, qui fait la communication avec les antérieurs parmi un tube, c'est l'unique qui a une sortie pour l'atmosphère.

Est dans ce bassin qu'au moyen d'un vis rotatif, se fait sortir le noir-de-fumée qui flotte sur le liquide que sert à filtrer les impuretés et qui est dans ce même bassin.

Ce produit, c'est-à-dire, le noir-de-fumée, est canalisé par le moyen d'un tube, étant gardé plus tard dans un dépôt approprié, après ce qu'il pourra être utile, par exemple, pour la coloration des pneus et des teintes, ou dans d'autre utilisations, y compris l'utilisation dans les "brickets".

Dans le dernier bassin il y a une ou plusieurs pompes qui ont non seulement la fonction de replacer dans le premier bassin le liquide ou solution à filtrer qui a été traîné pour le dernier bassin par la force des gaz filtrés, mais aussi l'alimentation des injecteurs du liquide.

Une petite cheminée, dont son entrée touche la partie supérieure du dernier bassin, permet la sortie des gaz qui sont déjà purifiés et ont une température basse.

Par autre côté, tous les résidus qui ne sont en suspension dans les gaz de combustion - soient ils cendres, fil de fer des pneus, ou d'autres - tomberont dans les wagonnets et après ils seront mis dehors le four ou chambre de combustion.

Les wagonnets déjà cités travaillent en couples: au moment ou un reçoit les résidus qui proviennent du brûlement réalisé dans la chambre de combustion, l'autre fait la décharge par le fond - raison par laquelle ce fond est mobile, de façon a permettre son ouverture - pour les cribles qui existent à côté de l'incinérateur, lesquels sont inclinés, dotés de plusieurs orifices - qui croissent au fur et à mesure que l'extrémité inférieur est touché - et animés d'un mouvement vibratoire, qui fait la séparation des résidus en conformité avec son volume, lesquels seront utiles plus tard comme matière essentielle pour l'industrie, notamment la construction civil, l'industrie sidérurgique et l'industrie verrier.

A fin de compléter la présente description et permettre une meilleur compréhension des caractéristiques de l'invention, sont présentés, avec un caractère qui explique et qui ne limite pas, les dessins annexés, dans lesquels les figures respectives représentent le suivant:
- Figure 1 - L'incinérateur qui est l'objet visé de la présente demande de brevet d'invention, observé d'un point de vu latéral selon une coupe longitudinale de l'incinérateur déjà cité.

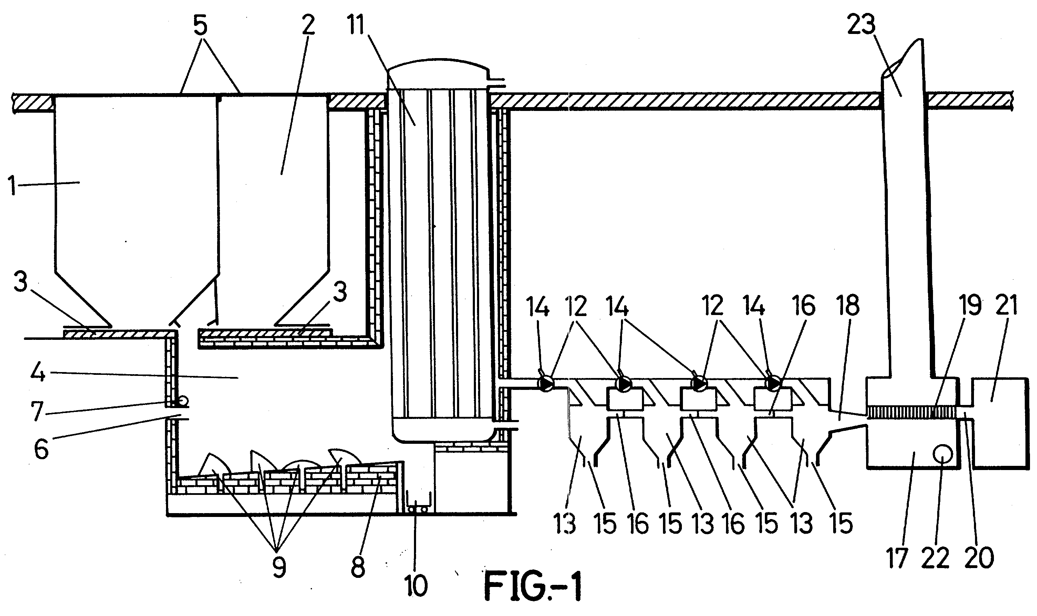

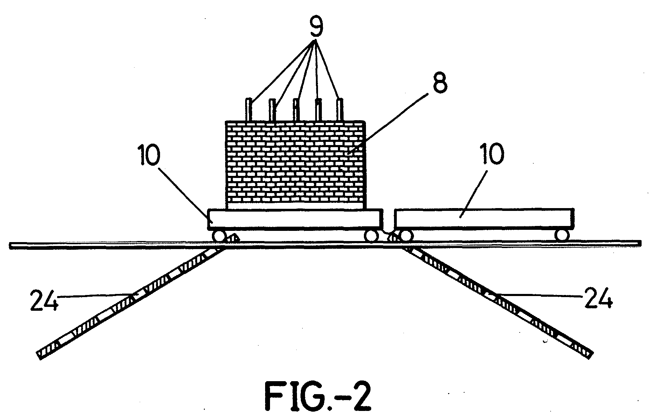

- Figure 2 - Une coupe transversale qui montre la zone d'action des wagonnets de recueille des résidus, observée d'un point de vu latéral.

Ayant comme base ces figures ont peut voir que l'incinérateur est composé par un silo (1), destiné à faire la recueille des ordures qu'y sont déchargées par voie des différents moyens de recueille du même, sans avoir quelque nécessité d'employer main d'oeuvre additionnel pour faire le chargement des silos.

A fin de permettre le chargement déjà cité, le terrain doit être préparé de façon que la zone de décharge d'ordures soit située dans un niveau égal ou supérieur à la bouche du silo.

A côté du silo (1) il y a un deuxième silo (2), destiné à faire la recueille dans son intérieur des pneus ou des matières analogues.

Au fond de chacun des silos (1) et (2), il y a une lame (3) qui peut faire un mouvement linéaire de va-et-vient, laquelle alimente la chambre de combustion (4) de l'incinérateur de façon à donner une distribution uniforme de la matière dans toute la largeur de l'entrée de la chambre de combustion.

On peut ajuster ou même régler la vélocité du mouvement des lames (3) qui forment le fond des silos (1) et (2), conformément aux nécessités d'alimentation du brûlement qui se fait dans le four.

Dans la région supérieur de chacun des silos (1) et (2), il y a un couvercle à verrou (5), avec un mouvement basculaire, qui ne laisse pas sortir les gaz qui puissent avoir l'origine dans la chambre de combustion et qui par conséquence empêche l'inflammation du contenu des silos respectifs.

Ces couvercles (5), sont ouverts seulement au moment où il se fait le déchargement des matériaux qui sont transportés pour l'intérieur du silo.

La région inférieur des silos (1) et (2) a une petite inclination - qui on n'a pas représenté dans les figures annexes - et qui se destine à éviter la pénétration de l'eau des ordures et des dégâts des silos dans la chambre de combustion laquelle pourrait causer préjudice au brûlement ici réalisé.

Cette eau, ainsi que les autres liquides résiduels, sont canalisés dans des dépôts appropriés pour éviter la libération des odeurs.

A fin de permettre la combustion, l'installation a une porte réglable (6), destinée à faciliter l'entrée de l'air dans la chambre de combustion, laquelle est plus ou moins ouverte d'accord les nécessités de combustion; et, pour faciliter l'initiation de la combustion, ou pour aider celle-ci dans d'autres moments qu'on pensent nécessaires, c'est-à-dire, pour obtenir une combustion convenable de la matière organique, cette installation a aussi un ou plusieurs brûleurs (7), qui sont situés dans un lieu approprié dans la chambre ou dans le four et alimentés par un huile déjà utilisé ou même un autre produit similaire.

La partie inférieure de la chambre de combustion (8) fabriquée de préférence dans un matériel réfractaire a une inclination convenable, laquelle est plus haute par où sortent les matériaux brûlés, de façon que la matière à l'intérieur du four, notamment la matière plastique liquéfiée, reste dans la chambre jusqu'au moment ou elle est complètement brûlée, ce qu'on obtient grâce à la force de la gravité qui permet la translation de la matière liquéfiée dans le sens inverse à celui de l'entraînement de la matière qui reste, lequel a l'origine dans l'action des lames excentriques (9), qui sont au fond de la chambre et ont essentiellement la fonction de traîner et élever les ordures avec l'objectif de permettre l'entrée dans son sein, de l'air qui est indispensable dans leur combustion.

D'autre côté, les lames (9) déjà citées, au moment ou elles causent l'entraînement de la matière solide, elles facilitent la combustion au long de toute la région du four, et non seulement à l'entrée de la chambre, ou les ordures et les pneus sont déchargés.

Ces lames excentriques (9) sont placées dans des différentes positions de façon à permettre le mouvement continuel du matériel qu'on veut brûler.

Le matériel qui n'est pas brûlé, parce qu'il est incombustible, est traîné par les lames (9) jusqu'au fin de la chambre de combustion, où il sera jeté dans des wagonnets (10).

La vitesse des lames (9) déjà citées est réglée convenablement conformément au type des matériaux qu'on veut brûler et la durée de la combustion.

Dans la sortie de la chambre de combustion (4) il y a une chaudière (11) qui permet la production d'énergie à partir de la chaleur qui provient du brûlement réalisé à l'intérieur de la chambre ou du four déjà cités et, en particulier, de la chaleur des gaz qui sont créés par la chambre de combustion, lesquels sont sucés vers l'extérieur de la chambre par des aspirateurs (12), de façon qu'ils traversent la chaudière déjà citée.

Les aspirateurs ont comme fonction la succion des impuretés qui sont en suspension dans les gaz de combustion, comme les poudres, les cendres, les fumées et les odeurs, qui résultent du matériel déjà brûlé à l'intérieur de la chambre déjà citée.

Ces impuretés seront plus tard canalisées dans des bassins (13) et la tâche d'aspiration et canalisation sera répétée les fois nécessaires pour assurer la destruction total des impuretés.

Dans les aspirateurs (12) il y a des injecteurs (14) de liquide, qui nettoient et refroidissent les gaz aspirés, empêchent un échauffement en excès des aspirateurs, évitent les impuretés de s'accrocher aux turbines respectives et aussi que se forment des crèmes épaisses à la superficie du liquide qui sert à filtrer, existant dans les bassins (13) lesquels se destinent à aider les aspirateurs dans la fonction de nettoyage et refroidissement des gaz.

Toutes les particules plus denses que le liquide déjà nommé sont déposées au fond des bassins et retirées parmi des purgatives (15) pour une future recyclage.

Les premiers bassins sont similaires, ils sont tous fermés, mais ils communiquent entre eux par le moyen d'une tubage de succion et d'une autre (16) de liaison, qui permet le nivellement du liquide dans les différents bassins et aussi la distribution, par décantage, des impuretés plus denses que la solution aqueuse.

Le dernier bassin (17), qui fait la communication avec les antérieurs par le moyen d'un tube (18), c'est l'unique qui a une sortie pour l'atmosphère, c'est aussi l'unique où est installé un vis rotatif (19) qui retire le noir-de-fumée qui est en suspension dans le liquide qui sert à filtrer, lequel est canalisé par un tube (20) et sera gardé dans un dépôt (21).

Dans le dernier bassin (17) il y a aussi une sortie des gaz pour la cheminée (23), ainsi qu'une pompe (22) qui a la finalité non seulement de faire la restitution dans le premier bassin du liquide ou solution utilisé dans la filtration et qui a été traîné par la force des gaz filtrés, mais aussi d'alimenter les injecteurs (12) de liquide.

D'autre côté, tous les résidus qui ne sont pas en suspension dans les gaz de combustion - soient ils cendres, fil de fer des pneus, ou d'autres - tombent dans les wagonnets (10), qui travaillent deux à deux, au moment ou un reçoit les résidus qui ont l'origine dans le brûlement l'autre fait la décharge dans les cribles (24), qui sont à côté de l'incinérateur, lesquels sont inclinés, et ont une diversité d'ouvertures - qui grandissent petit à petit jusqu'au moment ou on atteint l'extrémité inférieur - et sont animés d'un mouvement vibratoire, qui cause la séparation des résidus, d'accord son volume.

## Revendications

1. Incinérateur pour déchets qui cause la destruction des résidus des différents types, comprenant les pneus, cet incinérateur ayant deux silos (1, 2), situés au-dessus d'une chambre de combustion (4), un pour le dépôt des pneus et l'autre pour le dépôt des ordures en général, lesquels ont, dans la bouche ou partie supérieure, un couvercle (5) qui ferme hermétiquement et dans le fond qui est incliné, une tubage pour l'écoulement des liquides et une lame (3) qui, par son mouvement de va-et-vient, provoque l'alimentation de la chambre de combustion et fait la distribution du contenu respectif dédits silos selon le sens transversal de la chambre de combustion, ladite lame ayant un mouvement de vélocité réglable en fonction de la combustion qui est faite à l'intérieur de la chambre de combustion.

2. Incinérateur pour déchets suivant la revendication antérieure, caractérisé par avoir un fond incliné (8), de matériel réfractaire, lequel est plus élevé du côté de sortie de la chambre de combustion que du côté de l'entrée, et parce que, dans ce fond (8), il y a une série de pièces excentriques (9) qui sont intercalées dans ce même fond, qui ne tournent pas d'une façon synchronisée et qui traînent et élèvent les matières qui sont déchargées dans le four et que les dites pièces (9) déplacent tout au long de la chambre (4).

3. Incinérateur pour déchets suivant les revendications antérieures, caractérisé par avoir une chaudière (11) de récupération de la chaleur des gaz de combustion, située à la sortie de la chambre de combustion (4).

4. Incinérateur pour déchets suivant les revendications antérieures, caractérisé par avoir deux cribles vibratoires percés (24), inclinés et placés à chaque côté de l'incinérateur.

5. Incinérateur pour déchets suivant les revendications antérieures, caractérisé par en ce que les cribles vibratoires (24) ont des ouvertures qui grandissent toute au long des superficies respectives, au fur et à mesure qu'ils attachent l'extrémité inférieure.

6. Incinérateur pour déchets suivant les revendications antérieures, caractérisé par avoir un groupe d'aspirateurs (12) qui, par le moyen des canaux appropriés, font l'extraction pour l'intérieur des bassins (13), lesquels ont un liquide qui sert à filtrer, les fumées et les gaz qui résultent de l'incinération.

7. Incinérateur pour déchets suivant les revendications antérieures, caractérisé en ce que la filtration des gaz est faite dans les premiers bassins (13) dans lesquels les gaz passent à travers le liquide y contenu.

8. Incinérateur pour déchets suivant les revendications antérieures, caractérise parce que les bassins (13) sont liés entre eux par des tubes qui permettent la circulation du liquide qui sert à filtrer entre les bassins (13).

9. Incinérateur pour déchets suivant les revendications antérieures, caractérisé par avoir des injecteurs du liquide qui sert à filtrer qui nettoient et refroidissent les aspirateurs (12) et dispersent les crèmes qui existent éventuellement à la superficie du liquide des bassins.

10. Incinérateur pour déchets suivant les revendications antérieures, caractérisé par le dernier bassin (17) avoir un vis rotatif (19), qui fait la recueille du noir-de-fumée, une pompe (22), qui fait simultanément la restitution du niveau du liquide dans le premier bassin et l'alimentation des injecteurs (14), et encore une sortie pour la cheminée (23) des gaz déjà refroidis et purifiés.

## Patentansprüche

1. Müllverbrenner für vernierung verschiedener Art Rückstände , sowie auch von Reifen. Dieser Müllverbrenn, über der Verbrennungskammer, besitzt zwei Speicher: einer für Reifenlager und ein anderer für Mülllager - normalerweise in der höchste Seite, befindet sich eine Abdeckkappe (5) die sich luftdeckig schließt und im abfallenden Boden befindet sich ein Rohrstrang für den flüßichkeitsabfluß sowie auch ein Blätchen (3) das mit seiner Bewegung die Verbrennungskammer ernahrt und die die Verteilung der Spache der Inhälte macht - mit der transversale Richtung der Verbrennungskammer mit einem Blätchen mit reglische Geschwindigkeit die siche zu der interne Verbrennung verpaßt.

2. Müllverbrenner wie obengennante Zurückforderung, das ein abfallendes Boden hat aus hitzenbeständiges Material gebaut wurde - größer im Ausgang der Verbrennungskammer als in der Eingangsseite. Sie befinden auch verschiedene zwischengeschaltete Stücke (9) die sich in verschiedenen Richtungen bewegen und die die Materiale in dem ageladeten Verbrenner richten und die (9) sich durch der ganzen Länge der Kammer bewegen.

3. Müllverbrenner wie obengennante Zurückforderung der ein Kessel (11) für wiederlangung der Verbrennungsgaswärme im Ausgang der Verbrennungskammer hat.

4. Müllverbrenner wie obengennante Zurückforderung der zwei gelöcherte Vibrationssiebe (24) die sich in jeder Seite des Verbrenners befinden hat.

5. Müllverbrenner wie obengennante Zurückforderung der schwingende Siebe (24) hat die mit der Näherung zu der Oberflächen sich vergrößern.

6. Müllverbrenner wie obengennante Zurückforderung der eine Gruppe Absauger (12) besetzt die das Material aus den Schüßeln (13) herauszieht. In den Bassin befindet sich eine durchlaufende Flüßigkeit, Rauch, Gasen aus den Müllbrenner.

7. Müllverbrenner wie obengennante Zurückforderung der die Filtrierung in den ersten Schüßeln (13) macht wo die Gases in der Mitte von der Flüßigkeit vorbeikommen.

8. Müllverbrenner wie obengennante Zurückforderung der die Schüßeln (13) mit zwei Rhore verbindet hat.

9. Müllverbrenner wie obengennante Zurückforderung der durlaufernder Flüßigkeit Düser hat der den Absauger (12) putzt und kühlt und der den Rahm streuert.

10. Müllverbrenner wie obengennante Zurückforderung der in der letzten Schüßel (17) ein Stück (19) , daß das dunkle Rauch saugt , der eine Pumpe (22) hat der die Düsen (14) ernähert und der auch noch ein Ausgang in der Schlotte für den schon gekühlte und gereinigte Gas Schlot (23) hat.

## Claims

1. Waste incinerator which causes the destruction of residues of different types, including tyres, comprising two silos (1, 2), placed above a combustion chamber (4), one for the deposit of the tyres and the other for the deposit of the waste in general, silos which have, in the opening or upper part, a cover (5) which closes hermetically and, in the bottom, which is inclined, a set of tubes for the discharge of the liquids, and a blade (3) which, by its cadenced movement, causes the feeding of the combustion chamber and makes the distribution of the content of said silos according to the transversal direction of the combustion chamber, blade which has a movement of velocity adjustable in connection with the combustion operated at the interior of the combustion chamber.

2. Waste incinerator according to the previous claim, wherein there is a slanted bottom (8), maid of refractory material, bottom which is higher on the outlet side of the combustion chamber than on its inlet side, and, in that bottom (8), a series of intercalar eccentric plates (9), which turn out of phase in relation to each other and which pull and lift up the materials that are deposited in the furnace, materials that the said plates (9) move all along the chamber (4).

3. Waste incinerator according to the previous claims, wherein there is a boiler (11) for recovering the heat from the combustion gases, placed at the outlet of the combustion chamber (4).

4. Waste incinerator according to the previous claims, wherein there are two vibrating perforated screens (24), inclined and placed at each of the sides of the incinerator.

5. Waste incinerator according to the previous claims, wherein the vibrating screens (24) have perforations therein that are larger the closer said perforations are to the lower extreme of the screens.

6. Waste incinerator according to the previous claims, wherein there is a group of extractors (12) which, by means of the appropriate conduits, make the extraction to the interior of the containers (13), which have a filtering liquid for filtering the gases that result from the combustion.

7. Waste incinerator according to the previous claims, wherein the filtering of the gases is done in the first containers (13) in which the gases pass through said filtering liquid.

8. Waste incinerator according to the previous claims, wherein the containers (13) are interconnected by conduits which make possible the circulation of the filtering liquid between the containers (13).

9. Waste incinerator according to the previous claims, wherein there are filtering liquid injectors which wash and cool the extractors (12) and dissipate the creams eventually existing in the surface of the liquid of the containers.

10. Waste incinerator according to the previous claims, wherein there is the last container (17) which has a spiral conveyor (19) which collects the lampblack, a pump (22) which, simultaneously, restores the level of filtering liquid in the first container and feeds the injectors (14), and an outlet for the chimney (23) of the already cooled and impurity free gases.
